# EUROPÄISCHE PATENTANMELDUNG

(11) **EP 1 020 605 A2**
(43) Veröffentlichungstag der Anmeldung: **19.07.2000**
(21) Anmeldenummer: 00100756.6
(22) Anmeldetag: 14.01.2000
(51) Int. Cl.: E06B 3/02, E06B 3/66, E06B 5/16

(54) **Rahmenloser Glasflügel als bewegbar gelagerter oder ortsfester Flügel eines Fensters, einer Tür oder einer Fassade oder Glaswand**

(30) Priorität: 18.01.1999 DE 19901739; 03.07.1999 DE 19930831
(71) Anmelder: GEZE Glas Design GmbH, 71229 Leonberg (DE)
(72) Erfinder: Hofmann, Oliver, 71277 Rutesheim (DE); Fischbach, Stefan, 71229 Leonberg (DE)

(57) **Zusammenfassung**

Die Erfindung beschreibt eine Befestigungsvorrichtung für Beschlagteile eines rahmenlosen Glasflügels, der als drehbarer oder ortsfester Flügel einer Tür, eines Fensters oder einer ortsfesten Fassade ausgebildet ist. Der Glasflügel weist zwei parallele, zueinander beabstandete Scheiben (2) und einen am Außenbereich der Scheiben (2) umlaufenden Abstandshalter (3) auf, welcher den Innenraum der Scheiben (2) dicht umschließt. Der Abstandshalter (3) bildet im Außenbereich der Scheiben (2) Freiräume zur Aufnahme eines Trage- und Randabschlusselements (1). Dieses Trage- und/oder Randabschlusselement (1) ist mit den Scheiben (2) verklebt. Damit die beiden Scheiben (2) voneinander thermisch getrennt sind, sind das Trage- und/oder Randabschlusselement (1) sowie der Abstandshalter (3) aus wärmeisolierendem Material ausgebildet.

## Beschreibung

Die Erfindung betrifft einen Glasflügel als bewegbar gelagerter oder ortsfester Flügel eines Fensters, einer Tür oder einer Fassade oder Glaswand mit den Merkmalen des Oberbegriffs des Patentanspruchs 1.

Aus der DE 93 04 381 U1 ist ein rahmenloser Glasflügel bekannt. Der Flügel besteht aus zwei parallel zueinander angeordneten Glasscheiben. Im Randbereich des Flügels werden die beiden Scheiben durch ein Distanzprofil auf Abstand gehalten. Das Distanzprofil besteht aus zwei direkt mit den Scheiben verklebten Profilen, die über Isolierstege miteinander verbunden sind. Damit ist eine relativ komplex aufgebaute Distanzeinrichtung vorhanden. Besonders nachteilig ist, dass der Glasflügel dadurch relativ dick ist.

Der Erfindung liegt die Aufgabe zugrunde, einen rahmenlosen Flügel zu schaffen, der eine gute Wärmeisolierung erbringt und dabei kompakt mit geringer Dicke aufgebaut werden kann.

Die Erfindung löst die Aufgabe mit dem Gegenstand des Anspruchs 1.

Wenn der Abstandshalter und/oder das Trage- und/oder Randabschlusselement als thermischer Isolator ausgebildet ist, entfällt die bei herkömmlichen rahmenlosen Glasflügeln aufgrund der dort als Aluminium ausgebildeten Abstandshalter bzw. Trage- und/oder Randabschlusselemente vorhandene Wärmebrücke zwischen den Glasscheiben. Der Glasflügel wirkt somit wärmeisolierend, ohne dass die Trage- und/oder Randabschlusselemente oder eventuell Abstandshalter als mehrteilige Elemente mit separaten Isolierstegen ausgebildet werden müssen. Vorzugsweise werden sowohl die Trage- und/oder Randabschlusselemente als auch die Abstandshalter als Wärmeisolator ausgebildet, so dass die bei herkömmlichen rahmenlosen Glasflügeln vorhandene Wärmebrücken entfallen.

Die Ausbildung als Wärmeisolator bedeutet, dass das Trage- und/oder Randabschlusselement bzw. der Abstandshalter teilweise oder vollständig aus einem Material mit geringerer Wärmeleitfähigkeit als Metall oder zumindest mit geringerer Wärmeleitfähigkeit als Stahl oder Aluminium ausgebildet ist, oder dadurch, dass das Trage- und/oder Randabschlusselement bzw. der Abstandshalter mit entsprechendem Material beschichtet ist bzw. sind. Das Trage- und/oder Randabschlusselement ist vorzugsweise als einstückiger wärmeisolierender Körper ausgebildet, kann aber auch aus mehreren wärmeisolierenden Körpern zusammengesetzt sein. Gleiches gilt für den Abstandshalter.

Besondere Vorteile ergeben sich, wenn das Trage- und/oder Randabschlusselement oder der Abstandshalter aus Kunststoffmaterial ausgebildet ist bzw. sind. Der Kunststoff kann vorzugsweise als faserverstärkter Kunststoff, insbesondere glasfaserverstärktes Duroplast oder Thermoplast, ausgebildet sein. Der Matrixwerkstoff des Duroplast kann als Polyester oder Vinylester ausgebildet sein. Der Matrixwerkstoff des Thermoplast kann als Polyamid ausgebildet sein. Die Glasscheiben sind vorzugsweise aus wärmeisolierendem Glas ausgebildet.

Wenn der Abstandshalter und/oder das Trage- und/oder Randabschlusselement als Körper ausgebildet ist, der aus intumisierendem Material besteht oder intumisierendes Material enthält oder mit intumisierendem Material beschichtet ist, werden Ausführungen erhalten, die bei erhöhter Umgebungstemperatur, d. h. im Brandfall Wärme- und/oder Rauchisolationsfunktion erhalten. Das intumisierende Material quillt oder schäumt unter Hitzeeinwirkung auf.

Bei besonders bevorzugten Ausführungen kann das Trage- und/oder Randabschlusselement und/oder der Abstandshalter aus dem intumisierenden Material Parusol oder Parosol ausgebildet sein. Das Trage- und/oder Randabschlusselement bzw. der Abstandshalter kann als Körper aus intumisierendem Vollmaterial und/oder als ein Profil aus intumisierendem Material ausgebildet sein. Es sind auch Ausführungen vorgesehen, bei denen das Trage- und/oder Randabschlusselement und/oder der Abstandshalter aus einem Material ausgebildet ist, das aus einem Gemisch aus Kunststoff und intumisierendem Material, insbesondere Kunststoff-/Parosolgemisch, ausgebildet ist, vorzugsweise durch Extruhieren hergestellt. Das Trage- und/oder Randabschlusselement bzw. der Abstandshalter kann auch als Körper ausgebildet sein, der ein oder mehrere Ausnehmungen aufweist, in die intumisierendes Material aufgenommen wird oder der zwischen den Glasscheiben so angeordnet wird, dass zwischen dem Körper und der dem Körper zugewandten Innenseite der Glasscheibe intumisierendes Material angeordnet ist. Der Körper kann dabei aus Kunststoff und/oder aus Metall ausgebildet sein. Es sind hier auch Ausführungen denkbar, bei denen das Trage- und/oder Randabschlusselement bzw. der Abstandshalter als Körper ausgebildet ist, der mindestens eine zumindest aus einer der Glasscheiben hin geöffnete Bohrung und/oder mindestens einen entsprechend zu einer der Scheiben hin offenen inneren Hohlraum aufweist, in der bzw. in dem intumisierendes Material aufgenommen ist. Auch in diesem Fall kann der Körper aus Kunststoff und/oder Metall ausgebildet sein.

Bei den Ausführungen, bei denen intumisierendes Material eingesetzt wird, ergibt sich einerseits der Vorteil, dass intumisierendes Material bei normalen Betriebstemperaturen geringe Wärmeleitfähigkeit aufweist, d.h. geringerer Wärmeleitfähigkeit als Aluminium oder Stahl aufweist. Der weitere Vorteil ergibt sich bei intumisierendem Material daraus, dass bei hohen Temperaturen, d.h. im Brandfalle, das Material expandiert, gewissermaßen aufschäumt und dadurch eine fugendichte Abdichtung, vorzugsweise zur Scheibe hin, erbringt. Dadurch wird dichte Abdichtung, vorzugsweise zur Scheibe hin, erbringt. Dadurch wird eine mehr oder weniger rauchdichte Abdichtung erhalten und die Wärmeisolierung noch erhöht.

Die Trage- und/oder Randabschlusselemente sind vorteilhafterweise mit den Glasscheiben verklebt, und zwar ein Trage- und/oder Randabschlusselement entlang der oberen horizontalen Flügelkante, ein Trage- und/oder Randabschlusselement entlang der unteren horizontalen Flügelkante, ein Trage- und/oder Randabschlusselement entlang der linken vertikalen Flügelkante und ein Trage- und/oder Randabschlusselement entlang der rechten vertikalen Flügelkante. Die den Eckbereichen rechtwinklig aneinander angrenzenden Trage- und/oder Randabschlusselemente können im Eckbereich untereinander verbunden sein, entweder über Schraubverbindung, Vernietung, Verschweißung oder Verklebung. Diese Trage- und/oder Randabschlusselemente bilden dann ein nach außen durch die Glasscheiben abgedeckten, zwischen den Glasscheiben angeordneten, inneren Rahmen. Die Abstandshalter können in entsprechender Weise parallel zwischen den Scheiben mit Abstand zu den Trage- und/oder Randabschlusselementen oder einstückig mit diesen ausgebildet angeordnet sein. Sie können in gleicher Weise wie die Trage- und/oder Randabschlusselemente aus Profilmaterial, vorzugsweise mit gleicher oder entsprechender Materialausgestaltung, ausgebildet sein. Die Abstandshalter können in gleicher Weise wie die Trage- und/oder Randabschlusselemente mit Klebstoff mit den Scheiben verbunden sein. Als Klebstoff kann bei bevorzugten Ausführungen intumisierendes Klebstoffmaterial verwendet werden.

Die Abstandshalter können also ähnlich umlaufend wie die Trage- und/oder Randabschlusselemente ausgebildet zwischen den Scheiben einen inneren Rahmen bilden. Dieser aus den Abstandshaltern gebildete innere Rahmen kann innerhalb des zwischen den Scheiben angeordneten durch die Trage- und/oder Randabschlusselemente gebildeten inneren Rahmen zwischen den Scheiben angeordnet sein. Der innere Rahmen aus den Abstandshaltern und/oder der innere Rahmen aus den Trage- und/oder Randabschlusselementen kann den Innenraum zwischen den Scheiben luftdicht umschließen. Vorzugsweise kann dieser Innenraum zwischen dem Abstandshalter bzw. dem Trage- und/oder Randabschlusselement und den Glasscheiben hermetisch abgeschlossen ausgebildet sein. Der Raum kann mit einem Gas, vorzugsweise Schutzgas, gefüllt sein oder evakuiert sein oder mit einem transparenten Gel vorzugsweise Brandschutzgel gefüllt sein. Das Profil der Abstandshalter weist vorzugsweise einen rechteckigen Querschnitt auf. Innerhalb des Abstandshalters kann eine lufttrocknende Substanz angeordnet sein. Damit auch der Abstandshalter Wärmeschutzanforderungen erfüllt, kann auch er aus einem Material geringer Wärmeleitfähigkeit, vorzugsweise einem Kunststoff ausgebildet sein.

Das Trage- und/oder Randabschlusselement kann im Querschnitt aus einem Vollprofil geformt sein oder zumindest eine nach außen geöffnete Aufnahmenut, vorzugsweise hinterschnittene Aufnahmenut, aufweisen. In der Aufnahmenut ist die Aufnahme von Beschlagteilen und/oder Funktionsbauteilen vorgesehen. Bei den Beschlag- oder Funktionsbauteilen kann es sich um Türschließer oder andere Türantriebseinrichtungen, Dichtungen, Türbänder, Türverriegelungen, Türschienen, Zapfenelemente, Elemente aus Brandschutzmaterial, Sensoren oder dgl. handeln.

Bei bevorzugten Ausführungen ist vorgesehen, dass zwischen aufeinander liegenden Glasscheiben des Flügels mindestens eine Folie aus Brandschutzmaterial angeordnet ist, vorzugsweise intumisierende Folie. Der Flügel kann mehrere Glasscheiben aufweisen, zwischen denen jeweils eine Folie aus Brandschutzmaterial, insbesondere intumisierenden Material, angeordnet ist. Die Folie kann mit ihrer einen Seite auf der einen Glasscheibe und mit ihrer anderen Seite auf der anderen Glasscheibe aufliegend ausgebildet sein. Bei solchen Ausführungen mit Folie zwischen Glasscheiben wird bei Verwendung einer Folie aus wärmeisolierendem Material ein kompakt aufgebauter wärmeisolierender Glasflügel erhalten.

Bei Ausführungen mit mehreren nebeneinander angeordneten Glasflügeln, vorzugsweise nebeneinander angeordneten Festfeldflügeln, kann vorgesehen sein, dass das Trage- und/oder Randabschlusselement als eine den Flügel mit einem zweiten Flügel verbindende Kupplungseinrichtung ausgebildet ist oder mit einer dem Flügel mit einem zweiten Flügel verbindenden Kupplungseinrichtung zusammenwirkt. Hierbei kann die Kupplungseinrichtung ein Kupplungselement aufweisen, das einen ersten Abschnitt aufweist, der in das Trage- und/oder Randabschlusselement des Flügels eingreift, und einen zweiten Abschnitt aufweist, der in das Trage- und/oder Randabschlusselement des zweiten Flügels eingreift. Das Kupplungselement kann als Profilstück ausgebildet sein, das mit seiner einer Längsseite in die Aufnahmenut des Trage- und/oder Randabschlusselements des einen Flügels und mit seiner anderen Längsseite in die Aufnahmenut des Trage- und/oder Randabschlusselement des anderen Flügels eingreift. Vorzugsweise ist das Kupplungsstück aus wärmeisolierendem Material insbesondere intumisierendem Material ausgebildet. Das Kupplungsstück kann als Körper ausgebildet sein, der aus Kunststoff und intumisierendem Material und/oder aus Metall und intumisierendem Material besteht.

Bei Ausführungen mit nebeneinander angeordneten Glasflügeln kann vorgesehen sein, dass in der Fuge zwischen zwei benachbarten Glasflügeln Brandschutzmaterial, z.B. Silikon oder intumisierendes Material aufgenommen ist.

Die Erfindung wird anhand von speziellen Ausführungsbeispielen, die in den Figuren dargestellt sind, näher erläutert. Dabei zeigt:
- **Figur 1**: eine schematische Schnittansicht eines Flügels, mit Schnittebene senkrecht zur Flügelebene im oberen Bereich des Flügels;
- **Figuren 2 - 4**: entsprechende Schnittdarstellungen wie Figur 1, jedoch von abgewandelten Ausführungsbeispielen, bei unterschiedlicher Anordnung der Scheiben relativ zum Abstandshalter und Trage- und/oder Randabschlusselement, wobei die beiden Scheiben des Flügels jeweils nicht bündig sind;
- **Figur 5**: entsprechende Schnittdarstellung wie Figur 1, jedoch von einem abgewandelten Ausführungsbeispiel mit einem als Abstandshalter ausgebildeten Trage- und/oder Randabschlusselement, welches den Glasscheiben zugewandten Taschen aufweist, in denen intumisierendes Material aufgenommen ist;
- **Figur 6**: entsprechende Schnittdarstellung wie Figur 1, jedoch von einem abgewandelten Ausführungsbeispiel mit einem als Abstandshalter ausgebildeten Trage- und/oder Randabschlusselement, welches aus Kunststoff oder Metall ausgebildet ist und Bohrungen aufweist, die mit intumisierendem Material gefüllt sind;
- **Figur 7**: entsprechende Schnittdarstellung wie Figur 1, jedoch von einem abgewandelten Ausführungsbeispiel mit einem als Abstandshalter ausgebildeten Trage- und/oder Randabschlusselement, welches aus Kunststoff-/Parusolgemisch extruhiert ausgebildet ist;
- **Figur 8**: entsprechende Schnittdarstellung wie in Figur 1, jedoch von einem abgewandelten Ausführungsbeispiel, wobei der Flügel mit einem zweiten Flügel gekuppelt ist, beide Flügel nur teilweise, und zwar im Bereich des angekuppelten Flügelrands dargestellt ist;
- **Figur 9**: entsprechende Darstellung wie in Figur 8, jedoch von einem Ausführungsbeispiel mit zwei Flügeln, die aus mehreren Glasscheiben mit zwischen den Glasscheiben jeweils zwischengeschalteter Brandschutzfolie ausgebildet sind.

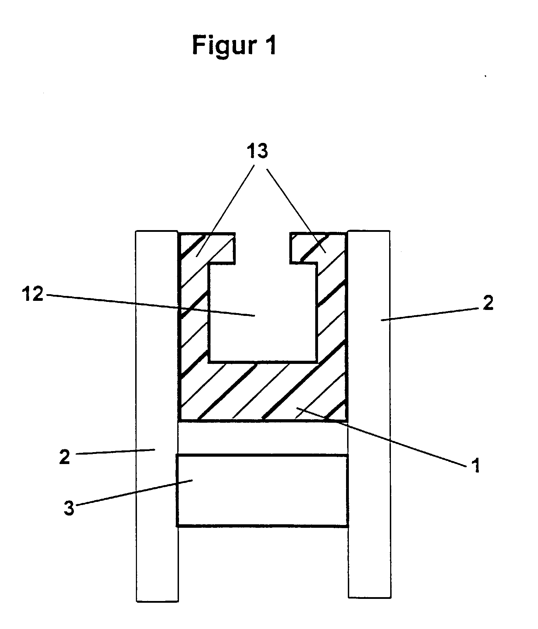

In **Figur 1** ist in dem nach außen offenen Freiraum zwischen den Glasscheiben 2 des Flügels und dem umlaufenden Abstandshalter 3 parallel zu der Außenkante des Flügels ein Trage- und/oder Randabschlusselement 1 angeordnet und mit den beiden Glasscheiben 2 verklebt.

Das Trage- und/oder Randabschlusselement 1 ist im Querschnitt aus einem Profil mit einer nach außen offenen, von zwei gleich langen Schenkeln 13 begrenzten, hinterschnittenen Aufnahmenut 12 zur Aufnahme von Beschlag- und/oder Funktionsteilen ausgebildet, so dass das Element im Querschnitt U-förmig ausgebildet ist. Die Außenkanten der beiden gleich langen Schenkel 13 des Trage- und/oder Randabschlusselements 1 schließen mit den Außenkanten der beiden Scheiben 2 bündig ab.

Wesentlich ist, dass zwischen den beiden Scheiben 2, die vorzugsweise aus wärmedämmendem Glas ausgebildet sind, keine oder keine wesentliche Wärmebrücke vorhanden ist. Dadurch, dass sowohl das Trage- und/oder Randabschlusselement 1 als auch der Abstandshalter 3 aus einem Material geringer Wärmeleitfähigkeit ausgebildet sind, ist eine thermische Trennung zwischen den beiden Glasscheiben 2 gewährleistet. Aus Gründen der Stabilität ist das Trage- und/oder Randabschlusselement 1 vorzugsweise aus einem faserverstärkten Kunststoff ausgebildet.

Eine derartige, wärmeisolierende Ausbildung der Teile zwischen den Scheiben 2 eines rahmenlosen Flügels kann auch in rahmenlosen Brandschutzflügeln zur Anwendung kommen.

Neben drehbaren Flügeln für Türen oder Fenster können auch ortsfeste Flügel für Fassaden oder für Glaswände im Randbereich derartig ausgebildet sein.

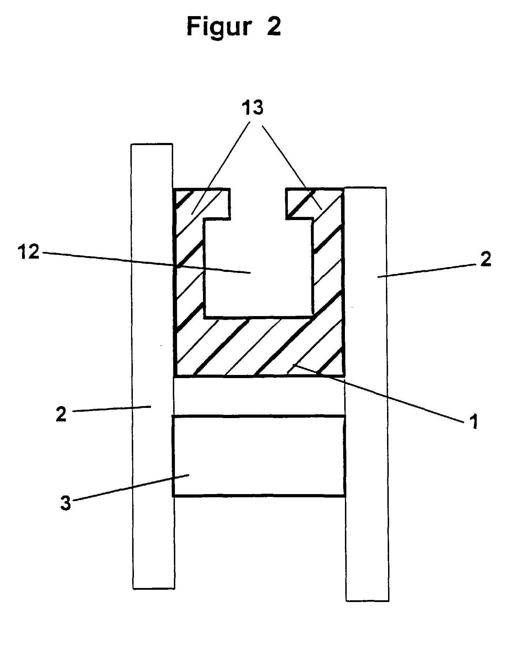

In den **Figuren 2, 3** und **4** sind ebenfalls Randbereiche rahmenloser Flügel abgebildet; sie sind jeweils aus denselben Komponenten ausgebildet: einem Trage- und/oder Randabschlusselement 1 mit einer hinterschnittenen Aufnahmenut 12, die von zwei gleich langen Schenkeln 13 begrenzt ist, zwei Scheiben 2, wobei jedoch die linke Scheibe mit ihrem Scheibenrand über den Rand der rechten Scheibe übersteht, und einem Abstandshalter 3. Das Trage- und/oder Randabschlusselement und der Abstandshalter 3 weisen die selben Materialeigenschaften auf wie diese Komponenten in **Figur 1**.

Bei dem Ausführungsbeispiel in **Figur 2** bilden die Außenkanten der beiden gleich langen Schenkel 13 des Trage- und/oder Randabschlusselements 1 mit der Außenkante der rechten Scheibe 2 einen bündigen Abschluss, und die Außenkante der linken Scheibe 2 steht über den Außenkanten der Schenkel 13 des Trage- und/oder Randabschlusselements 1 bzw. der rechten Scheibe 2 über.

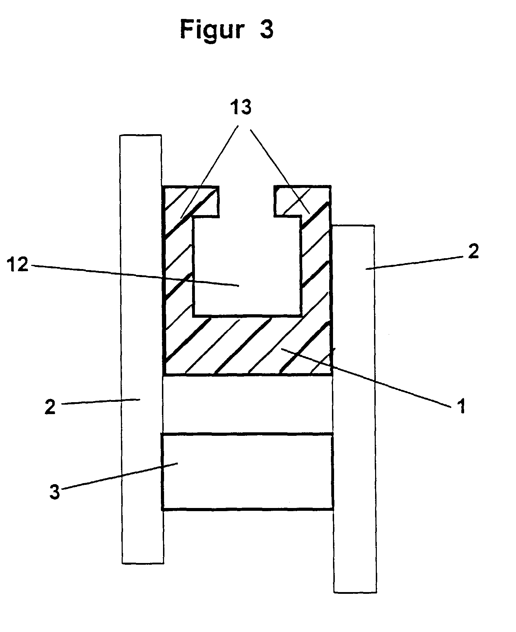

Bei dem Ausführungsbeispiel in **Figur 3** steht die Außenkante der linken Scheibe 2 über der Außenkante des linken Schenkels 13 des Trage- und/oder Randabschlusselements 1 über, und die Außenkante des rechten Schenkels 13 des Trage- und/oder Randabschlusselements 1 steht über der Außenkante der rechten Scheibe 2 über.

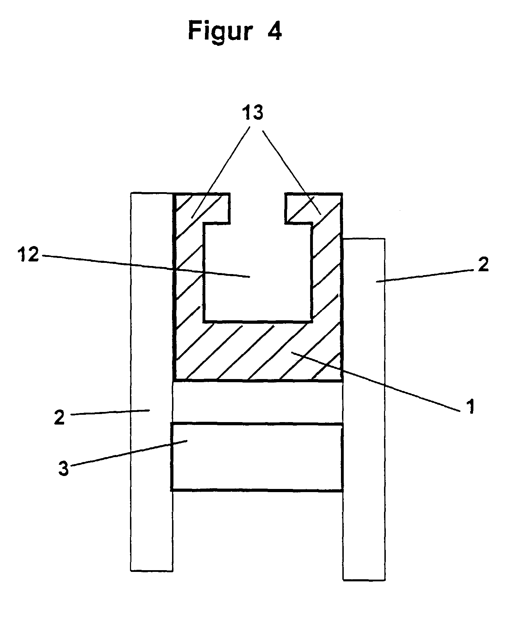

Bei dem Ausführungsbeispiel in **Figur 4** schließt die Außenkante der linken Scheibe 2 mit den Außenkanten 13 des Trage- und/oder Randabschlusselements 1 bündig ab, und die Außenkanten der linken Scheibe 2 sowie der Schenkel 13 des Trage- und/oder Randabschlusselements stehen über der Außenkanten der rechten Scheibe 2 über.

Derartig ausgebildete Randbereiche rahmenloser Flügel bzw. ortsfester Fassadenelemente bilden mit komplementär ausgebildeten Randbereichen angrenzender Flügel überschlagende bzw. unterschlagende Falze. Um die Haupt- bzw. die Nebenschließkanten zwischen zwei aneinander angrenzenden Flügeln bzw. einem an ein ortsfestes Fassadenelement angrenzenden Flügel im geschlossenen Zustand der Tür oder des Fensters wärmedämmend abzudichten, kann in dem Trage- und/oder Randabschlusselement innerhalb einer Befestigungsstelle, vorzugsweise Aufnahmenut, eine Dichtleiste aufgenommen sein. Eine derartige Dichtleiste ist vorzugsweise innerhalb einer Aufnahmenut in einer Befestigungsstelle an einem der beiden Schenkel 13 angeordnet.

In weiteren gegenüber den **Figuren 1** bis **4** abgewandelten Ausführungsbeispielen können weitere Anordnungen der einzelnen Teile: Trage- und/oder Randabschlusselement 1, Abstandshalter 3, zwei Scheiben 2 vorgesehen sein. Insbesondere können die beiden Schenkel 13 des Trage- und/oder Randabschlusselements 1 im Querschnitt unterschiedlich lang und/oder breit sein.

Beschlag- und/oder Funktionsteile bzw. einzelne Abschnitte von Beschlag- und/oder Funktionsteilen können direkt in die Aufnahmenut 12 des Trage- und/oder Randabschlusselements 1 aufgenommen sein; allerdings kann auch vorgesehen sein, dass das Trage- und/oder Randabschlusselement 1 an der Stelle eines Beschlag- und/oder Funktionsteils teilweise ausgespart bzw. unterbrochen und durch dieses zwischen den Scheiben 2 teilweise bzw. vollständig ersetzt wird. Dann ist vorzugsweise vorgesehen, dass das Beschlag- und/oder Funktionsteil zumindest teilweise aus einem Material ausgebildet sind, das Wärme schlecht, d.h. schlechter als Metall, d.h. schlechter als Aluminium oder Stahl, leitet oder mit einem solchen wärmeisolierendem Material beschichtet ist.

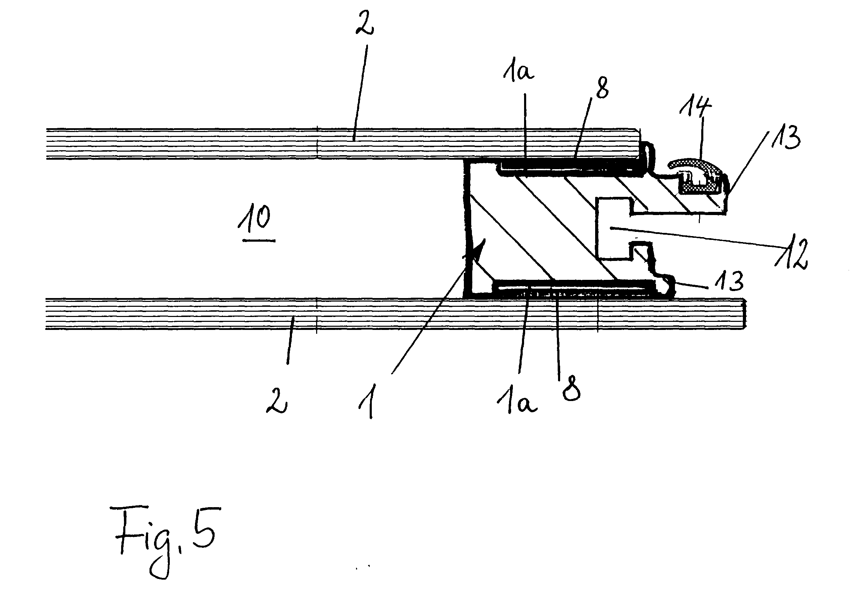

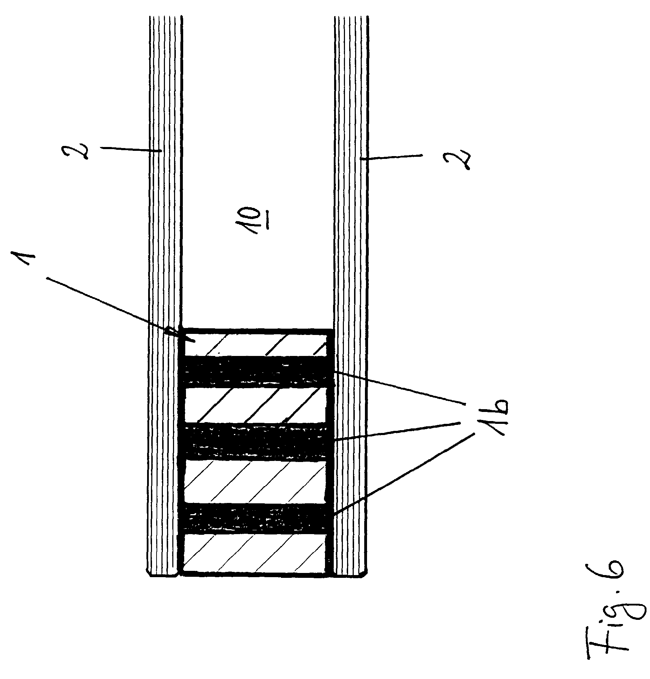

Bei den Ausführungsbeispielen in den **Figuren 5** und **6** weist das Trage- und/oder Randabschlusselement 1 jeweils Aufnahmeräume auf, in denen intumisierendes Material aufgenommen ist.

Bei dem Beispiel in **Figur 5** sind an den zu den Innenseiten der Glasscheiben zugewandten Seiten des Trage- und/oder Randabschlusselements im Querschnitt U-förmige Aufnahmetaschen 1a ausgebildet, die jeweils zu der zugeordneten Innenseite der Glasscheibe 2 hin offen sind und jeweils durch die betreffende Glasscheibe 2 abgedeckt werden. Dadurch wird zwischen der Aufnahmetasche 1a und der Innenseite der Glasscheibe 2 ein Aufnahmeraum ausgebildet. In dem Aufnahmeraum ist intumisierendes Material 8 aufgenommen.

In **Figur 6** sind in den Trage- und/oder Randabschlusselement 1 drei parallele Querbohrungen ausgebildet, die sich senkrecht zu den Innenseiten der Glasscheiben 2 erstrecken. Die Bohrungen 1b sind als Durchgangsbohrungen ausgebildet und werden durch die Glasscheiben 2 jeweils an ihren Außenseiten abgeschlossen. Die Bohrungen 1b bilden Aufnahmeräume, in denen intumisierendes Material 8 aufgenommen ist.

Bei hohen Umgebungstemperaturen, z.B. im Brandfall, schäumt das intumisierende Material auf. Dadurch wird bei den Ausführungsbeispielen in den **Figuren 5** und **6** zwischen den Trage- und/oder Randabschlusselementen und der Glasscheibe eine erhöhte Abdichtung erhalten. Das intumisierende Material verschließt den Fugenraum zwischen den Trage- und/oder Randabschlusselementen und der Glasscheibe bzw. zwischen den Glasscheiben dicht. Beim Aufschäumvorgang tritt das intumisierende Material aus dem Aufnahmeraum des Trage- und/oder Randabschlusselements aus und drängt in den Fugenraum zwischen der Innenseite der Glasscheibe 2 und der der Glasscheibe zugewandten Außenfläche des Trage- und/oder Randabschlusselements.

Was die konstruktive Ausgestaltung des Trage- und/oder Randabschlusselementes 1 betrifft: Bei dem Ausführungsbeispiel in **Figur 5** weist das Trage- und/oder Randabschlusselement ebenfalls eine nach außen offene hinterschnittene Aufnahmenut 12 zur Aufnahme von Beschlagteilen auf und ist insoweit ähnlich wie das Trage- und/oder Randabschlusselement 1 in **Figur 1** bis **4** ausgebildet. Im Unterschied zu den **Figuren 1** bis **4** ist es jedoch nicht zu einer Längsmittellinie symmetrisch ausgebildet, sondern einer der U-Schenkel 13 ist länger als der andere U-Schenkel, so dass der längere U-Schenkel mit seiner Oberkante über die Oberkante des kürzeren U-Schenkels übersteht. Die eine Glasscheibe 2 ist größer als die andere Glasscheibe, so dass der Randbereich der größeren Glasscheibe 2 über den Randbereich der kleineren Glasscheibe übersteht. Die größere Glasscheibe 2 liegt an dem kürzeren U-Schenkel 13 an, und die kleinere Glasscheibe 2 liegt an dem längeren U-Schenkel 13 an. Die größere Glasscheibe steht dabei über den oberen Rand des kürzeren U-Schenkels 13, aber auch über den oberen Rand des längeren U-Schenkels 13 über, während der längere U-Schenkel 13 mit seinem oberen Rand über den Rand der kleineren Glasscheibe 2 übersteht, wobei dieser überstehende U-Schenkel 13 eine Nase 13a aufweist, die über die Stirnkante im Randbereich der kleineren Scheibe 2 übergreift. Diese Nase 13a bildet gleichzeitig den stirnseitigen Abschluss der Aufnahmetasche 1a. An der Außenseite des über diese Scheibe überstehenden oberen Teils des Schenkels 13 ist eine Aufnahmenut 13b zur Aufnahme einer Dichtungslippe 14 ausgebildet. Die Aufnahmetasche 1a an der der größeren Scheibe zugewandten Seite ist als eine im Querschnitt U-förmige Nut ausgebildet. Sie wird durch die Nutseitenwände begrenzt. In diesem Bereich weist der Schenkel 13, d.h. der kürzere Schenkel 13 keine die Stirnseite der Seite übergreifende Nase auf.

Bei dem Ausführungsbeispiel in **Figur 6** ist das Trage- und/oder Randabschlusselement als im Querschnitt rechteckiger Körper ausgebildet. Eine hinterschnittene Aufnahmenut an der Außenseite ist nicht vorgesehen.

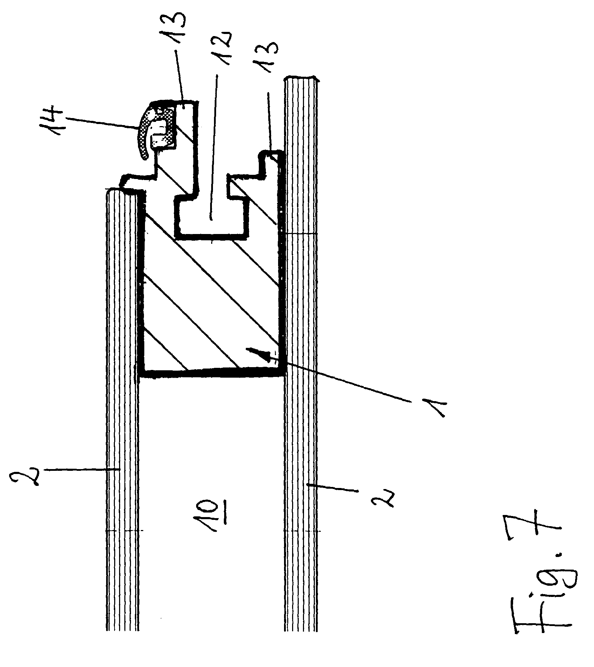

Bei dem Ausführungsbeispiel in **Figur 7** ist das Trage- und/oder Randabschlusselement 1 als Körper ausgebildet, der konstruktiv gleich ausgestattet ist wie bei dem Ausführungsbeispiel in **Figur 5**. Auch die Anordnung zwischen den Glasscheiben entspricht der in **Figur 5**. Im Unterschied zu dem Beispiel in **Figur 5** sind jedoch keine separaten Aufnahmeräume zur Aufnahme von intumisierendem Material in dem Trage- und/oder Randabschlusselement vorgesehen, sondern das Element 1 ist aus einem Gemisch aus Kunststoff und intumisierendem Material ausgebildet, und zwar durch Extruhieren hergestellt. Bei entsprechend hohen Umgebungstemperaturen erfolgt ein Aufschäumen des gesamten Trage- und/oder Randabschlusselements 1 oder ein Austreten des intumisierenden Materials aus den Poren des Trage- und/oder Randabschlusselements. Insbesondere im Fugenraum zwischen dem Trage- und/oder Randabschlusselement und den anliegenden Glasinnenscheiben entsteht mit dem Aufschäumen ein dichter Abschluss. Das Trage- und/oder Randabschlusselement kann sich bei dem Aufschäumvorgang auch mehr oder weniger weit in den Innenraum zwischen den Glasscheiben hin und nach außen im äußeren Kantenbereich der Glasscheiben ausdehnen.

Bei den Ausführungsbeispielen in den **Figuren 5** bis **7** handelt es sich um Brandschutzausführungen. Der Innenraum 10 zwischen den Scheiben 2, der durch die umlaufenden Trage- und/oder Randabschlusselemente 1 umschlossen wird, ist mit Brandschutzgel ausgefüllt. Um eine besonders gute Wärmeisolierung zu erhalten, ist das Trage- und/oder Randabschlusselement 1 aus wärmeisolierendem Kunststoff ausgebildet, dessen Wärmeleitfähigkeit geringer ist als die von Metall. Dies gilt auch für das Ausführungsbeispiel in **Figur 7**, bei dem das Trage- und/oder Randabschlusselement, aus einem extruhiertem Kunststoffteil bestehend, aus einem Gemisch aus Kunststoff und intumisierendem Material besteht.

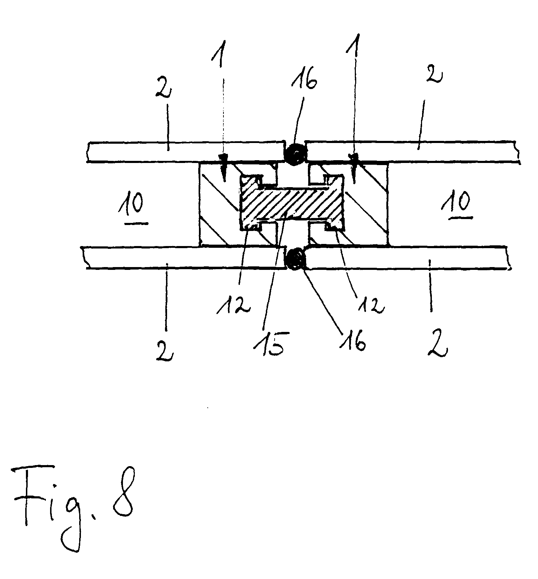

Bei dem Ausführungsbeispiel in **Figur 8** handelt es sich um nebeneinander angeordnete Glasflügel, die in ihrem einander angrenzenden Randbereichen jeweils entsprechend ausgestaltet sind, mit einem Trage- und/oder Randabschlusselement 1 in einer konstruktiven Ausgestaltung wie bei dem Ausführungsbeispiel in **Figur 1**. In der einander zugewandten Aufnahmenut 12 der Glasflügel ist jedoch ein Kupplungselement 15 eingesetzt. Das Kupplungselement 15 ist jeweils an dem in die Aufnahmenut eingreifenden Randabschnitt als Kupplungsrand ausgebildet, der im Querschnitt T-förmig ausgestaltet ist und in den komplementären Hinterschneidungsbereich der Aufnahmenut 12 eingreift. Das Kupplungselement 15 kann aus intumisierendem Material ausgebildet sein oder aus einem Gemisch aus Kunststoff und intumisierendem Material oder auch als Metall- oder Kunststoffprofilkörper, welcher entsprechende Aufnahmeräume für intumisierendes Material aufweist. Die Aufnahmeräume können als Bohrungen oder Aufnahmetaschen ausgebildet sein, im Prinzip ähnlich ausgestaltet wie die Aufnahmebohrungen und Aufnahmetaschen im Trage- und/oder Randabschlusselement 1 in den **Figuren 5** und **6**. Zusätzlich sind im Fugenbereich zwischen den einander zugewandten Stirnkanten der äußeren Glasscheiben der Glasflügel streifenförmige Dichtungselemente 16 angeordnet, die ebenfalls aus intumisierendem Material ausgebildet sein können. Die Dichtungselemente 16 können alternativ aber auch aus Brandschutzsilikon ausgebildet sein.

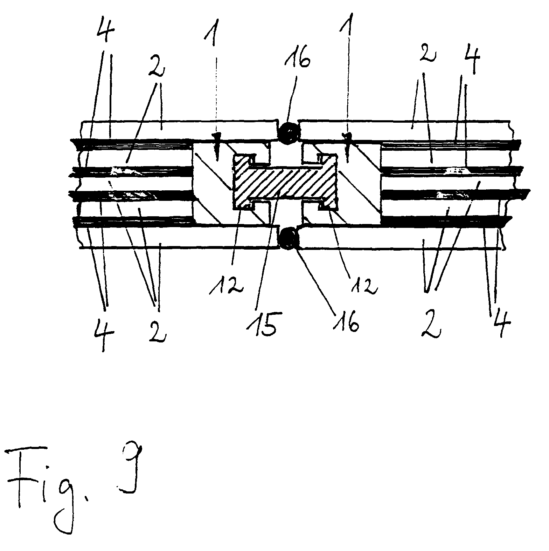

Bei dem Ausführungsbeispiel in **Figur 9** sind ebenfalls zwei Glasflügel auf Stoß miteinander gekuppelt, wobei ebenfalls ein Kupplungselement 15 in die Trage- und/oder Randabschlusselemente 1 an den einander zugewandten Stirnseiten der Flügel eingreifend angeordnet ist. Im Unterschied zu dem Ausführungsbeispiel in **Figur 8** sind jedoch die Glasflügel aus mehr als zwei Glasscheiben 2 aufgebaut. Die Glasscheiben 2 weisen jeweils an ihrer Außenseite und an ihrer Innenseite jeweils eine an der Außenseite des Trage- und/oder Randabschlusselements 1 anliegende äußere Glasscheibe 2 auf. In dem Raum zwischen diesen äußeren beiden Glasscheiben sind weitere Glasscheiben 2 angeordnet, wobei jeweils zwischen einander anliegenden Glasscheiben 2 eine Folie 4 angeordnet ist, die aus intumsierendem Material besteht. Bei dem Ausführungsbeispiel in **Figur 9** sind zwischen den beiden äußeren großen Glasscheiben, die an den Außenseiten des Trage- und/oder Randabschlusselements 1 anliegen, jeweils vier kleinere Glasscheiben 2 angeordnet, die mit ihren Stirnkanten jeweils an der Unterseite d.h. am Boden des Trage- und/oder Randabschlusselements 1 anliegen. Zwischen den Scheiben sind jeweils die Folien 4 dicht anliegend an den Scheiben angeordnet. Zwischen den also insgesamt sechs Glasscheiben 2 sind also jeweils fünf Folienschichten 4 angeordnet. Bei dem Ausführungsbeispiel in **Figur 9** ist eine Folie eingesetzt, deren Dicke der Dicke einer Einzelglasscheibe entspricht, so dass also die Flügel jeweils aus ungefähr gleich dicken Schichten bestehend aus Glasscheiben 2 und intumisierenden Schichten 4 ausgebaut ist. Bei einem abgewandelten Ausführungsbeispiel können Folien eingesetzt werden, deren Dicke wesentlich geringer als die Dicke der Glasscheibe ist, z.B. Dünnschichtfolien, so dass also zwischen den Glasscheiben 2 jeweils eine oder mehrere Dünnschichtfolien angeordnet sind.

Bei einem nicht dargestellten gegenüber **Figur 9** abgewandelten weiteren Ausführungsbeispiel können die Glasflügel als sogenannte Pyrostoppglasflügel ausgebildet sein, wobei das Trage- und/oder Randabschlusselement 1, ebenfalls, wie in **Figur 9** dargestellt, in einem Aufnahmeraum zwischen den beiden äußeren überstehenden Glasscheiben angeordnet ist. Dieser Aufnahmeraum kann durch entsprechende Ausfräsung der Flügelstirnseite ausgebildet sein.

Bei den in den Figuren dargestellten Ausführungsbeispielen ist das Trage- und/oder Randabschlusselement jeweils zumindest an einer Seite von einer Glasscheibe des Glasflügels vollständig überlappt. An seiner anderen Seite ist das Trage- und/oder Randabschlusselement ebenfalls zumindest teilweise überlappt. Bei den Ausführungsbeispielen in den **Figuren 3, 4, 5** und **7** ist die auf einer Seite nur teilweise Überlappung realisiert; bei den Ausführungsbeispielen der **Figuren 1, 2** und **6** sowie **8** und **9** ist das Trage- und/oder Randabschlusselement beidseitig vollständig überlappt.

## Patentansprüche

1. Rahmenloser Glasflügel als bewegbar gelagerter oder ortsfester Flügel einer Tür, eines Fensters oder einer Fassade oder Glaswand,
mit zumindest zwei parallel angeordneten Scheiben (2) aus Glas,
mit einem zwischen den Scheiben (2) umlaufenden Abstandshalter (3) und/oder mit einem im Randbereich der Scheibe (2), vorzugsweise zwischen den Scheiben (2), angeordneten Trage- und/oder Randabschlusselement (1), vorzugsweise zur Befestigung eines Beschlagteils,
wobei vorzugsweise vorgesehen ist, dass das Trage- und/oder Randabschlusselement (1) und/oder das Beschlagteil von mindestens einer der Scheiben (2) in Blickrichtung senkrecht auf die Flügelebene zumindest teilweise überlappt wird bzw. werden,
und wobei vorzugsweise vorgesehen ist, dass der Abstandshalter (3) und das Trage- und/oder Randabschlusselement (1) separat mit Abstand zueinander oder einstückig ausgebildet sind,
**dadurch gekennzeichnet,** dass das Trage- und/oder Randabschlusselement (1) und/oder der Abstandshalter (3)
als thermischer Isolator ausgebildet ist bzw. sind und/oder
als Körper ausgebildet ist, der aus intumisierendem Material besteht oder intumisierendes Material enthält oder mit intumisierendem Material beschichtet ist.

2. Glasflügel nach Anspruch 1,
**dadurch gekennzeichnet,** dass das Trage- und/oder Randabschlusselement (1) und/oder der Abstandshalter (3) teilweise oder vollständig aus wärmeisolierendem Material ausgebildet ist bzw. sind und/oder eine Beschichtung aus solchem Material aufweist bzw. aufweisen.

3. Glasflügel nach Anspruch 2,
**dadurch gekennzeichnet,** dass das wärmeisolierende Material als intumisierendes Material, z.B. Parusol und/oder als Kunststoffmaterial ausgebildet ist.

4. Glasflügel nach Anspruch 3,
**dadurch gekennzeichnet,** dass der Kunststoff als Duroplast oder Thermoplast und/oder als faserverstärkter, vorzugsweise glasfaserverstärkter Kunststoff ausgebildet ist, z.B. als glasfaserverstärkter Duroplast oder glasfaserverstärkter Thermoplast ausgebildet ist.

5. Glasflügel nach Anspruch 4,
**dadurch gekennzeichnet,** dass der Matrixwerkstoff des Duroplast als Polyester oder Vinylester ausgebildet ist.

6. Glasflügel nach Anspruch 4 oder 5,
**dadurch gekennzeichnet,** dass der Matrixwerkstoff des Thermoplast als Polyamid ausgebildet ist.

7. Glasflügel nach einem der Ansprüche 3 bis 6,
**dadurch gekennzeichnet,** dass das Trage- und/oder Randabschlusselement (1) und/oder der Abstandshalter (3) als ein Körper aus intumisierenden Vollmaterial und/oder als ein Profil aus intumisierendem Material ausgebildet ist bzw. sind.

8. Glasflügel nach einem der Ansprüche 3 bis 7,
**dadurch gekennzeichnet,** dass das Trage- und/oder Randabschlusselement (1) und/oder der Abstandshalter (3) aus einem Material bestehend aus einem Gemisch aus Kunststoff und intumisierenden Material insbesondere Kunststoff/Parusolgemisch ausgebildet, vorzugsweise durch Extruhieren hergestellt ist bzw. sind.

9. Glasflügel nach einem der Ansprüche 3 bis 8,
**dadurch gekennzeichnet,** dass das Trage- und/oder Randabschlusselement (1) und/oder der Abstandshalter (3) als Körper ausgebildet ist bzw. sind, vorzugsweise aus Kunststoff und/oder Metall ausgebildet, der ein oder mehrere Ausnehmungen aufweist, in die intumisierendes Material aufgenommen wird oder der zwischen den Glasscheiben so angeordnet wird, dass zwischen dem Körper und der dem Körper zugewandten Innenseite der Glasscheibe intumisierendes Material angeordnet ist.

10. Glasscheibe nach einem der Ansprüche 3 bis 9,
**dadurch gekennzeichnet,** dass das Trage- und/oder Randabschlusselement (1) und/oder der Abstandshalter (3) als Körper ausgebildet ist bzw. sind, vorzugsweise aus Kunststoff und/oder Metall ausgebildet, der mindestens eine Bohrung und/oder mindestens einen inneren Hohlraum aufweist, in der bzw. in dem intumisierendes Material aufgenommen ist.

11. Glasflügel nach einem der vorangehenden Ansprüche,
**dadurch gekennzeichnet,** dass eine der Glasscheiben (2) oder mehrere Glasscheiben (2) aus wärmeisolierendem Glas ausgebildet ist bzw. sind.

12. Glasflügel nach einem der vorangehenden Ansprüche,
**dadurch gekennzeichnet,** dass das Trage- und/oder Randabschlusselement (1) mindestens eine nach außen offene Aufnahmenut, vorzugsweise hinterschnittene Aufnahmenut (12) zur Aufnahme eines Beschlag- und/oder Funktionsteils aufweist.

13. Vorrichtung nach einem der vorangehenden Ansprüche,
**dadurch gekennzeichnet,** dass zwischen den beiden Scheiben (2) des Flügels mindestens ein Beschlag und/oder Funktionsteil angeordnet ist und/oder eingreift.

14. Glasflügel nach einem der Ansprüche 12 oder 13,
**dadurch gekennzeichnet,** dass in der Aufnahmenut (12) des Trage- und/oder Randabschlusselements (1) mindestens ein Beschlag- und/oder Funktionsteil und/oder ein Dichtungselement angeordnet ist und/oder eingreift.

15. Glasflügel nach Anspruch 14,
**dadurch gekennzeichnet,** dass das Dichtungselement als ein- und ausfahrbar bewegbares Dichtungselement ausgebildet ist, vorzugsweise zwangsweise bei der Bewegung des Flügels und/oder durch einen Antriebsmotor, vorzugsweise Elektromotor betätigbar.

16. Glasflügel nach einem der vorangehenden Ansprüche,
**dadurch gekennzeichnet,** dass das Trage- und/oder Randabschlusselement (1) und/oder der Abstandshalter (3) an einer Stelle zwischen den beiden Scheiben (2) ausgespart und/oder unterbrochen ist bzw. sind und das Beschlag- und/oder Funktionsteil an dieser Stelle eingreifend angeordnet ist.

17. Vorrichtung nach Anspruch 16,
**dadurch gekennzeichnet,** dass das Beschlag- und/oder Funktionsteil und/oder das Dichtungselement zumindest im Bereich eines zwischen den Scheiben (2) eingreifenden Abschnitts vollständig oder teilweise aus einem wärmeisolierendem Material und/oder intumisierenden Material ausgebildet ist oder eine Beschichtung aus solchem Material aufweist oder eine Schicht aus solchem Material zwischen dem eingreifenden Abschnitten und der Glasscheibe (2) angeordnet.

18. Glasflügel nach einem der Ansprüche 12 bis 17,
**dadurch gekennzeichnet,** dass das Beschlag- und/oder Funktionsteil eine Türantriebseinrichtung, ein Türband, eine elektrische Einrichtung, eine Dichtung und/oder eine Türschiene ist.

19. Glasflügel nach einem der vorangehenden Ansprüche,
**dadurch gekennzeichnet,** dass das Trage- und/oder Randabschlusselement (1) und/oder Abstandshalter (3) unmittelbar zwischen den Scheiben angeordnet ist bzw. sind, vorzugsweise unmittelbar mit den Scheiben (2) verklebt ist bzw. sind.

20. Glasflügel nach Anspruch 19,
**dadurch gekennzeichnet,** dass der Klebstoff aus Brandschutzmaterial, z.B. Silikon und/oder als Dichtungsmaterial und/oder aus intumisierenden Material ausgebildet ist.

21. Glasflügel nach Anspruch 19 oder 20,
**dadurch gekennzeichnet,** dass das Trage- und/oder Randabschlusselement (1) als einstückiges oder mehrteiliges Profil und/oder als Kunststoffspritzgussbauteil ausgebildet ist.

22. Glasflügel nach einem der vorangehenden Ansprüche,
**dadurch gekennzeichnet,** dass der Abstandshalter (3) und/oder das Trage- und/oder Randabschlusselement (1) umlaufend ausgebildet ist bzw. sind und zwischen dem Abstandshalter (3) bzw. dem Trage- und/oder Randabschlusselement (1) und den Glasscheiben (2) ein hermetisch abgeschlossener Raum ausgebildet ist, der mit einem Gas, vorzugsweise Schutzgas gefüllt ist oder evakuiert ist oder mit einem transparenten Gel, vorzugsweise Brandschutzgel gefüllt ist.

23. Glasflügel nach einem der vorangehenden Ansprüche,
**dadurch gekennzeichnet,** dass zwischen einander anliegenden Glasscheiben (2) des Flügels mindestens eine Folie (4) aus Brandschutzmaterial angeordnet ist, vorzugsweise eine intumisierende Folie (4).

24. Glasflügel nach Anspruch 23,
**dadurch gekennzeichnet,** dass der Flügel mehrere einander anliegenden Glasscheiben (2) aufweist, zwischen denen jeweils eine Folie (4) aus Brandschutzmaterial insbesondere intumisierendem Material angeordnet ist.

25. Glasflügel nach einem Ansprüche 23 oder 24,
**dadurch gekennzeichnet,** dass die Folie (4) mit ihrer einen Seite auf der einen Glasscheibe (2) mit ihrer anderen Seite auf der anderen Glasscheibe (2) aufliegend ausgebildet ist.

26. Glasflügel nach einem der vorangehenden Ansprüche,
**dadurch gekennzeichnet,** dass der bewegbar gelagerte Flügel als Drehflügel z.B. Anschlag oder Pendelflügel, oder als Schiebeflügel oder als Wendeflügel oder als Schwingflügel oder als Karusellflügel ausgebildet ist.

27. Glasflügel nach Anspruch 25 oder 26,
**dadurch gekennzeichnet,** dass das Kupplungsstück aus wärmeisolierendem Material, vorzugsweise intumisierendem Material als Körper ausgebildet ist, der aus Kunststoff und intumisierendem Material und/oder aus Metall und intumisierendem Material besteht.

28. Glasflügel insbesondere nach einem der Ansprüche 24 bis 27,
**dadurch gekennzeichnet,** dass in eine Fuge zwischen zwei benachbarten Glasflügeln Brandschutzmaterial, z.B. Silikon oder intumisierendes Material aufgenommen ist.

29. Glasflügel nach einem der vorangehenden Ansprüche,
**dadurch gekennzeichnet,** dass das Trage- und/oder Randabschlusselement (1) und/oder der Abstandshalter (3) aus Glas ausgebildet ist bzw. sind.
